# EUROPEAN PATENT SPECIFICATION

(11) **EP 1 070 899 B1**
(45) Date of publication and mention of the grant of the patent: **14.09.2005**
(21) Application number: 00306201.5
(22) Date of filing: 20.07.2000
(51) Int. Cl.: F16L 37/084

(54) **Connecting structure**
Verbindungsstruktur
Structure de connexion

(30) Priority: 21.07.1999 JP 20610799; 07.06.2000 JP 2000170560
(43) Date of publication of application: 24.01.2001
(73) Proprietor: TOKAI RUBBER INDUSTRIES, LTD., Aichi-ken, 485-8550 (JP)
(72) Inventor: Kawasaki, Minoru, Komaki-shi, Aichi-ken 485-0007 (JP); Kasahara, Kazuhito, Komaki-shi, Aichi-ken 485-0013 (JP); Miyajima, Atsuo, Inuyama-shi, Aichi-ken 484-0894 (JP); Sakazaki, Kazushige, Komaki-shi, Aichi-ken 485-0831 (JP)
(74) Representative: Copsey, Timothy Graham

(56) References cited:
- EP-A- 0 872 678
- FR-A- 2 373 012
- US-A- 4 991 882
- US-A- 5 131 691
- US-A- 5 228 724

## Description

### BACKGROUND OF THE INVENTION

The present invention relates to a connecting structure in which a resin tube and a tubular mating member such as a pipe made of metal are connected in a fluid-tight condition. Such a structure is favorably used for connecting structures between resin tubes and metallic pipes for use in automobiles calling for resistance to gasoline.

A conventionally known connecting structure of this type is disclosed in Japanese Patent Unexamined Publication No. 6-50482.

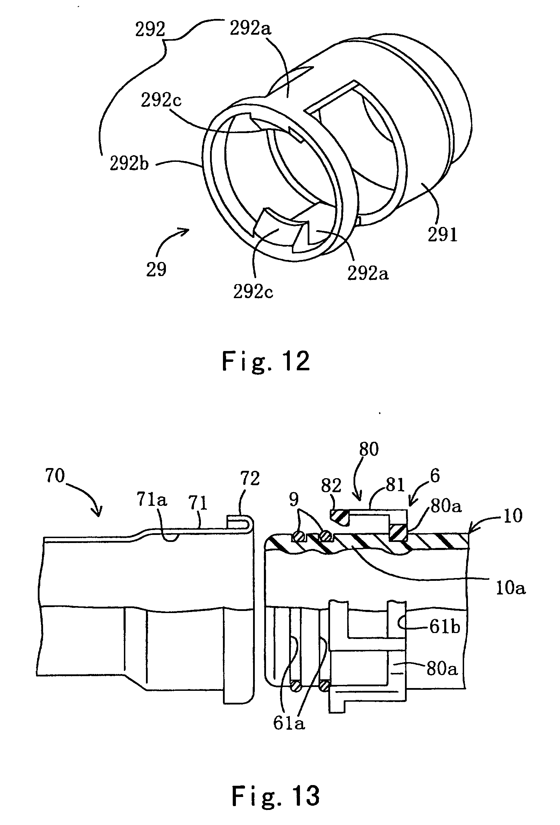

In this prior art, as illustrated in Fig. 13, the connecting structure has a resin hose construction 6 in which a resin hose 10 produced by blow molding and a resin connecting member 80 produced by injection molding are combined into one-piece unit. Via the resin hose construction, the connecting structure can be connected to an tubular mating member 70 by one-touch operation. The resin hose construction 6 is produced by the following procedure. Either one of the resin hose 10 or the connecting member 80, for example, the resin hose 10 is formed by blow molding beforehand, and then, in the injection molding process where the connecting member 80 is formed, the resin hose 10 is integrally combined to the connecting member 80 into one-piece unit. Alternatively, the connecting member 80 is formed by injection molding beforehand, and then is placed in a blow molding machine. In the blow molding process where the resin hose 10 is formed in the blow molding machine, the connecting member 80 is integrally combined to the resin hose 10 into one-piece unit.

More specifically, when the resin hose 10 is formed by blow molding in the blow molding machine, an annular groove 61a for holding an O-ring 9 and an annular attachment groove 61b for holding the connecting member 80 which is to be connected to the tubular mating member 70 are integrally formed in the resin hose 10 at the outer peripheral surface of one end portion 10a thereof. The resin hose 10 is then placed in an injection molding machine, and is injection-molded to form a hose construction 6 in which an annular base portion 80a of the resin connecting member 80 is integrally held in the annular attachment groove 61b. With this arrangement, when an end portion 61 of the resin hose construction 6 is inserted and fitted to an engaging inner peripheral surface 71a of an open end portion 71 of the tubular mating member 70, an engaging claw 82 of an engaging arm 81 of the connecting member 80 is engaged with a folded collar 72, and thereby connecting the tubular mating member 70 and the resin hose 10 with each other. There is also a known connecting structure having a hose construction 6 produced by the following process. The resin connecting member 80 is formed by injection molding beforehand, and is placed in a blow molding machine. In the blow molding process where the resin hose 10 is formed in the blow molding machine, the connecting member 80 is combined to the resin hose 10 into one-piece unit to form the hose construction 6.

A rubber tube has been conventionally used as an automotive fuel tube or the like. In recent years, however, the rubber tube tends to be replaced by a resin tube made of hard resin, such as nylon, having good gasoline permeability resistance or the like due to its lower cost. The same thing occurs to other automotive dedicated tubes such as an air tube.

Conventionally, as disclosed in, for example, Japanese Patent Unexamined Publication No. 5-196184 and Japanese Patent Unexamined Publication No. 2-159493, in case of fluid-tight connecting a resin tube of this type to a mating member, the following connecting structure is known. A containing portion is formed such that a retaining member is retained on axial one end of an axis bore of the cylindrical housing and a ring-shaped elastic seal member, such as an 0 ring, is retained axially inward of this retaining member. When the insertion end portion of a tubular mating member is inserted into the interior of the retaining member from one end of the housing thereof, the retaining member is snap-engaged with an annular stopper on the insertion end portion to thereby fluid-tight connect the mating member to the one end portion of the housing. At the same time, an engaged one end portion having an outer peripheral surface smaller in diameter than the one end portion is formed integrally with the other end of the housing. The inner peripheral surface of the one end portion of the resin tube is press-fitted into the engaged end portion and the resin tube is fluid-tight connected to the other end portion of the housing. The housing having the retaining member retained on one end portion and the tubular mating member inserted into the one end portion of the housing form a quick connector as a whole. Normally, a tube connecting structure using the quick connector is widely used.

The above-stated quick connector is complicate in structure and expensive. Due to this, there has been proposed a method of directly connecting a resin tube to a tubular mating member not using the quick connector but using a simple member. This is disclosed in, for example, the published specification of Japanese Patent Unexamined Publication No.6-50482. Specifically, it discloses a hose connecting structure in which the first engagement portion of a tubular mating member is formed integrally with the end portion, which is blow-molded, of a resin tube, an elastic seal member such as an O ring is installed into an annular groove, which is also blow-molded, and the second engagement portion of the tubular mating member is engaged with the first engagement portion of the resin tube, thereby connecting the resin tube with the tubular mating member.

In the tube connecting structure connecting a resin tube with a tubular mating member using the conventional quick connector described as above, the nipple portion of a cylindrical housing is press-fitted into the inner peripheral surface of one end of the resin tube. The problem with this structure is that the connecting portion is lacking in the reliability in terms of pulling resistance and sealing property. And the tube connecting structure using the conventional quick connector is complicated in structure and requires a number of parts. As a result, the structure becomes expensive. It also requires two liquid-tight seal connecting portions axially separated from each other, with the result that the tube connecting structure becomes longer in axial direction. In these circumstances, demand for a tube connecting structure which is more compact, requires lower cost and ensures that a resin tube is liquid-tight connected to a tubular mating member is rising.

By the way, the tube connecting structure proposed in the published specification of Japanese Patent Unexamined Publication No. 6-50482 as stated above does not employ a conventional quick connector mentioned above. Thus, it is relatively simple in structure and is excellent is sealing property. This is because the resin tube is directly connected to the tubular mating member by putting an elastic seal member between the resin tube and the tubular mating member.

However, due to the fact that the first engagement portion is formed integrally with the end portion of the resin tube so as to engage the resin tube with the tubular mating member, the connecting structure requires bothersome blow molding. That is, it requires setting a resin tube into a blow molding die and then blow molding or injection molding the first engagement portion, or setting the first engagement portion, which has been molded independently in advance, into a blow molding die and then extruding parison into the blow molding die to thereby blow-molding the first engagement portion. Thus, the structure is disadvantageous in that it has poor productivity and that the merit of low cost is thereby lost.

US 5,131,691 discloses a snap-fit connector for connecting slender piping members at end portions in which the total axial length of the connector is shortened to retain the gas-tightness over a period of time by the use of seal rings which are sandwiched gas-tight directly between the overlapping circumferential walls in the vicinity of the ends of the connected portions. EP 0 872,678 discloses a tube joint which enables easy transfer between tubes of different calibers necessitating only a change in nut member, insert bush and collar member corresponding to the caliber of the respective tubes. US 4,991,882 discloses a fluid-tight connector for quick connection of tubular fluid conduits comprising male and female members adapted to provide a seal therebetween. The connector is to be easy and quick to engage but resistant to unwanted disconnection.

### SUMMARY OF THE INVENTION

In view of these circumferences of the prior art, the objective of the present invention is to provide a connecting structure capable of directly connecting a resin tube and a tubular mating member in a fluid-tight condition, unlike a conventional case of using a quick connector where a nipple formed on the other end of the connector housing is press-fitted into an inner peripheral surface of the end portion of a resin tube to make a connection between the resin tube and the tubular mating member, and unlike a conventional case of employing a blow molding for integrally forming a first engaging element into the resin tube, and thereby providing a connecting structure which is capable of connecting a resin tube and an tubular mating member to each other via an elastic sealing member and which is excellent in sealing properties as well as being a simple and compact in structure and low at cost.

For achieving the above objectives, according to the present invention, a connecting structure for connecting a resin tube and an tubular mating member in a fluid-tight condition, includes: the resin tube formed with a cylindrical wall with substantially uniform thickness, and including a diameter-enlarged end portion at its one end with a diameter larger than the other side portion adjacent to the diameter-enlarged end portion having an opening and a tapered shoulder wall; a connecting member including a tubular base portion having a restraining inner peripheral surface with a diameter decreasing toward the other side which is inserted and fitted to an outer periphery of the tapered shoulder wall of the resin tube and a first engaging element extending radially outwardly from the base portion; a tubular press-fitting means for essentially preventing said connecting member from removing toward one end of the resin tube including at least one bush body with outwardly protruding annular element in a radial direction beyond the outer peripheral surface of the diameter-enlarged end portion at one end side thereof, the outwardly protruding annular element having a radially extending surface, the press-fitting means forming the enlarged end portion at one end of the resin tube and being press-fit and fixed in the opening of the resin tube from its one end to engage or firmly attach and fix the restraining inner peripheral surface of the connecting member to the tapered shoulder wall; an annular sealing member mounted in an annular outer peripheral groove formed at the outer periphery of the diameter-enlarged end portion in a space in an axial direction between the radially extending surface of the outwardly protruding annular element and the base portion of the connecting member; a tubular mating member including an inserting end portion capable of being relatively inserted into the outer peripheries of the annual surface of the outwardly protruding annular element and the base portion of the connecting member by being engaged with the outer periphery of the sealing member in a fluid-tight condition, and a second engaging element projecting outward from the outer peripheral surface of the inserting end portion of the tubular mating member in a radial direction, the second engaging element capable of being snappedly engaged with the first connecting member when the inserting end portion is relatively inserted into the diameter-enlarged end portion.

The first engaging element and the second engaging element may be engaged with each other in radial direction and an outward position at an outer periphery of the seal member.

The present invention also extends to a connecting structure for connecting a resin tube and an tubular mating member in a fluid-tight condition, comprising: the resin tubeformed with a cylindrical wall with substantially uniform thickness, and including a diameter-enlarged end portion at its one end with a diameter larger than the other side portion adjacent to the diameter-enlarged end portion having an opening and a tapered shoulder wall; a connecting member including a tubular base portion having a restraining inner peripheral surface with a diameter decreasing toward the other side which is inserted and fitted to an outer periphery of the tapered shoulder wall of the resin tube and a first engaging element extending radially outwardly from the base portion; a tubular press-fitting means for essentially preventing the connecting member from removing toward one end of the resin tube including at least one bush body with outwardly protruding annular element in a radial direction beyond the outer peripheral surface of the diameter-enlarged end portion at one end side thereof, the outwardly protruding annular element having a radially extending surface, the press-fitting means forming the enlarged end portion at one end of the resin tube and being press-fit and fixed in the opening of the resin tube from its one end to engage or firmly attach and fix the restraining inner peripheral surface of the connecting member to the tapered shoulder wall; an annular sealing member mounted in an annular inner peripheral groove formed at the inner periphery of the diameter-enlarged end portion in a space in an axial direction between said one bush body and another bush body independent from the one bush body; a tubular mating member including an inserting end portion capable of being relatively inserted into the inner surfaces of said one bush body and another bush body by being engaged with the inner periphery of the sealing member in a fluid-tight condition; and a second engaging element projecting outward from the outer peripheral surface of the inserting end portion of the tubular mating member in a radial direction, the second engaging element capable of being engaged snappedly with the first connecting member when the inserting end portion is relatively inserted into the diameter-enlarged end portion.

In the present invention described as above, the base portion of the tubular connecting member has a restraining inner peripheral surface with a diameter decreasing toward the other side. By press-fitting and fixing the press-fitting bush into the opening of the resin tube from its one end side, a diameter-enlarged end portion having a tapered shoulder wall is formed at the other side of the diameter-enlarged end portion. The restraining inner peripheral surface of the connecting member, which is inserted and fitted to the outer periphery of the other side of the diameter-enlarged end portion, is engaged or firmly attached and fixed to the tapered shoulder wall. When the inserting end portion of the tubular mating member is relatively inserted to the outer periphery or inner periphery of the diameter-enlarged end portion of the resin tube via the sealing member, the first engaging element of the connecting member is elastically deformed to be engaged with the second engaging portion projecting from the outer peripheral surface of the inserting end portion of the tubular mating member. In this manner, the resin tube is firmly connected to the tubular mating member.

In a preferable embodiment of the connecting structure of the present, the outwardly protruding annular element is formed by a flange or a cap-shaped holder. Moreover, the sealing member is engaged with the inner peripheral surface of said diameter-enlarged end portion of said resin tube.

In another embodiment of the connecting structure of the present, the press-fitting means includes a first tubular bush press-fitted into the inner peripheral surface at the other end side of said diameter-enlarged end portion of the resin tube to secure the connecting member, and a second bush formed with the outwardly protruding annular element and press-fitted in the inner peripheral surface at one end side of said diameter-enlarged end portion of the resin tube at a position coaxially remote from the first bush in an axial direction.

In a preferable embodiment of the connecting structure of the present, the first bush and the second bush are integrally formed into one-piece unit. In another embodiment, the first bush and the second bush are independent from each other, and are firmly attached to positions remote from each other in the axial direction. Furthermore, the second bush has a flange at one end side of the second bush in a radial direction for preventing said sealing member from slipping off outward from the outer peripheral surface of said diameter-enlarged end portion of said resin tube. Moreover, the second bush has a cap-shaped holder extending outward from the outer peripheral surface at one end side thereof for preventing said sealing member from slipping off outward from the outer peripheral surface said diameter-enlarged end portion of said resin tube.

Furthermore ,the inserting end portion of the tubular mating member has a contact portion at its one end for being into contact with the outwardly protruding annular element of the press-fitting means. Moreover, the connecting member includes a tubular base portion, a pair of parallel arms extending in parallel to each other from the base portion toward one end and symmetrically disposed with respect to each other about the diameter, a ring for annularly connecting free ends of the pair of arms, and an engaging claw projecting inward from the inner peripheral surface of the ring in a radial direction.

According to the present invention, the connecting structure for connecting the resin tube and the tubular mating member in a fluid-tight condition which has excellent sealing properties can be provided, wherein the resin tube can be directly connected to the tubular mating member via a tubular or ring-shaped elastic sealing member by use of a connecting member inserted and fixed to the outer peripheral surface of the end portion of the resin tube. The connecting structure of the present invention does not use a conventional connector having a complicated structure with a nipple to be press-fitted into an inner peripheral surface of the resin tube for connection. The connecting structure does not need the blow molding and blow molding die for integrally forming the first engaging element and the resin tube into one-piece unit. Thus-formed connecting structure has a simple structure with high productivity and is low at cost.

### BRIEF DESCRIPTION OF THE DRAWINGS

Fig. 1 is a cross-sectional view of a main portion for explaining the state where the resin tube is connected to the tubular mating member.
Fig. 2 is a side view of a main portion of the tube connecting structure of Fig. 1.
Fig. 3 is a perspective view showing other connecting member for use in the tube connecting structure of Fig. 1.
Fig. 4 is a notched cross-sectional view for explaining a tubular sealing member according to an embodiment based on Fig. 1.
Fig. 5 is a notched cross-sectional view for explaining the tubular sealing member according to another embodiment.
Fig. 6 is a notched cross-sectional view for explaining the tubular sealing member according to another embodiment.
Fig. 7 is a cross-sectional view of the upper half of a main portion of a press-fitting bush according to another embodiment based on Fig. 1.
Fig. 8 is a cross-sectional view of the upper half of a main portion of the connecting member according to still another embodiment based on Fig. 1
Fig. 9 is a cross-sectional view of the upper half of a main portion of the connecting member according to still another embodiment based on Fig. 1.
Fig. 10 is a cross-sectional view of a main portion for explaining the state where the resin tube is connected to the tubular mating member according to an embodiment still other than those described above.
Fig. 11 is a side view of Fig. 12.
Fig. 12 is a perspective view showing the connecting member according to another embodiment of Fig. 10.
Fig. 13 is a partially notched side view schematically showing the state before the resin tube is clamped to the tubular mating member according to a conventional example.

### DETAILED DESCRIPTION OF PREFERRED EMBODIMENT

In the present invention, a tubular base portion of the resin connecting member formed as one-piece unit is inserted into an outer periphery of an end portion of a resin tube. Then, a tubular press-fitting means is press-fitted into an inner periphery of an end portion of the resin tube. By press-fitting the tubular press-fitting means, the diameter of the end portion of the resin tube is enlarged to some extent to form a diameter-enlarged end portion in the resin tube. The diameter-enlarged end portion has a tapered shoulder wall including a tapered wall at other side thereof. On the other hand, the tubular base portion of the connecting member has a restraining inner peripheral surface with a diameter gradually decreasing toward the other end side of the resin tube. The restraining inner peripheral surface cooperates with the tapered shoulder wall to prevent the tubular base portion of the connecting member from removing toward one end side of the resin tube in the axial direction.

Specifically, by press-fitting the tubular press-fitting means into the opening of the resin tube from its one end to fix it inside the opening, a diameter-enlarged end portion having tapered shoulder wall is formed in other side thereof. When the connecting member is mounted on the other end side portion adjacent to the diameter-enlarged end portion of the resin tube, the restraining inner peripheral surface of the connecting member can be engaged or firmly attached and fixed to the tapered shoulder wall of the resin tube.

According to the present invention, there is no need for the blow molding to form the end portion of the resin tube for fixing the connecting member, as has been conducted for the connecting structure described in Japanese Patent Unexamined Publication No. 6-50482. The connecting member for engaging the tubular mating member can be easily attached and fixed to any kind of a single-layered or multi-layered resin tube short in length with a straight end, which has been produced into a long length by injection molding and is then cut into a predetermined length. In addition, the connecting structure is extremely advantageous in cost.

The connecting member, fixed to the outer peripheral surface of the end portion of the resin tube, can be simply and directly connected to the tubular mating member by the engagement between the first engaging element of the connecting member and the second engaging element of the tubular mating member, without any other members interposed therebetween. The shapes of the first engaging element of the connecting member and the second engaging portion of the tubular mating member are not specifically limited, as far as they can be engaged with each other to firmly connect the connecting member with the tubular mating member. Between the resin tube and the tubular mating member directly connected to each other, an annular elastic sealing member such as a tubular elastic sealing member and an O-ring is pinched and held. The annular elastic sealing member contributes to an improved sealing property. Since the tubular press-fitting means is press-fitted in the inner peripheral surface of the end portion of the resin tube, the dimensional accuracy at the end portion of the resin tube is increased, and the sealing property is further improved accordingly. At the same time, although the end portion of the resin tube alone is easily damaged and deformed by external stress, the tubular press-fitting bush reinforces and protects the end of the resin tube from damage and deformation.

In the connecting structure according to an embodiment of the present invention, the connecting member is formed with a plurality of engaging arm portions respectively including a supporting portion extending outward from the tubular base portion in a radial direction and disposed at a location remote from the other supporting portion in a peripheral direction, an arm extending toward the one end portion via the supporting portion, and an engaging claw at the tip end of the arm. When the inserting end portion of the tubular mating member is relatively inserted into either the outer periphery or inner periphery of the diameter-enlarged end portion of the resin tube via the sealing member, the arm of the connecting member is elastically deformed, and the engaging claw of the connecting member is engaged with the second engaging portion of the tubular mating member projecting from the outer peripheral surface of the inserting end portion thereof. In this manner, the resin tube is firmly connected to the tubular mating member.

In the connecting structure according to another embodiment of the present invention, the connecting member is formed with a pair of arms in parallel to each other which extend from the tubular base portion and are located at the symmetric positions with respect to each other about the diameter, a ring for annularly connecting the free ends of the pair of arms to each other, and an engaging claw projecting inward from the inner periphery surface of the ring in a radial direction. When the inserting end portion of the tubular mating member is relatively inserted into the outer periphery or inner periphery of the diameter-enlarged end portion of the resin tube via the sealing portion, the ring and the parallel arms are elastically deformed to engage the engaging claw with the second engaging portion projecting from the outer peripheral surface of the inserting end portion of the tubular mating member. In this manner, the tubular mating member and the resin tube are firmly connected to each other. The engagement between the first engaging element and the second engaging element can be detached by deforming the ring with no need for a releasing tool.

In the connecting structure according to an embodiment of the present invention, the press-fitting means includes an radially extending surface for preventing the sealing member from slipping off outward from the diameter-enlarged end portion of the resin tube in the axial direction. The outwardly protruding annular element is formed by a flange or a cap-shaped holder.

More specifically, the press-fitting means includes one bush body with a flange or cap-shaped holder which is press-fitted into the inner peripheral surface of the diameter-enlarged end portion of the resin tube at one end side of the diameter-enlarged end portion , another bush body which is press-fitted into the inner peripheral surface of the diameter-enlarged end portion of the resin tube at other side of the diameter-enlarged end portion for firmly fixing the connecting member, and which is located coaxially remote from one bush body in the axial direction.

One bush body has a radially extending surface extending outward from the outer peripheral surface thereof at its one end side in the radial direction beyond the outer peripheral surface of the diameter-enlarged end portion at one end side of the resin tube.

One bush body and another bush body may be integrally formed into one-piece unit, and are press-fitted and fixed in the diameter-enlarged end portion at one end side of the resin tube. Alternatively, one bush body and another bush body are separately formed, and are press-fitted and fixed in the diameter-enlarged end portion at one end of the resin tube at positions remote from each other in the axial direction.

In the former case, the inserting end portion of the tubular mating member is inserted into the outer periphery of the diameter-enlarged end portion of the resin tube. Therefore, the sealing member is mounted in an annular groove formed in the space between the radially extending surface of the bush and the base portion of the connecting means at the outer periphery of the diameter-enlarged end portion.

In the latter case, the inserting end portion of the tubular mating member is inserted into the inner periphery of the diameter-enlarged end portion of the resin tube. Therefore, the sealing member is mounted to the annular groove formed in the space between one bush body and another bush body at the inner periphery of the opening of the diameter-enlarged end portion.

Various types of tubes which have been conventionally and normally available automotive tubes and the like can be used as resin tubes. Any straight or curved tubes may be used as long as the end portions thereof are straight. Although the material of the resin tube is not specifically limited, nylon or fluoroplastic material may be preferable for a fuel tube. The tube may be normally mono-layered or multiple-layered made of different types of resin. Also, to add conductivity, a multiple-layered tube having, for example, a conductive ETFE layer, a conductive nylon layer or the like included as an inner layer may be used. The resin tube such as, for example, a fuel tube, is normally about 4 to 18 mm in inner diameter and about 0.5 to 2 mm in thickness.

The engagement member formed into one piece and the tubular press-fitted member in the present invention may be made of hard resin or metal. Preferably, they are made of resin such as polyacetal resin and nylon resin in light of production cost. A conventional member such as an O ring can be used as an annular member. A metal or resin pipe to which a resin tube is connected, such as a pipe attached to various equipment such as, for example, an automotive engine may serve as a tubular mating member.

### The Embodiment

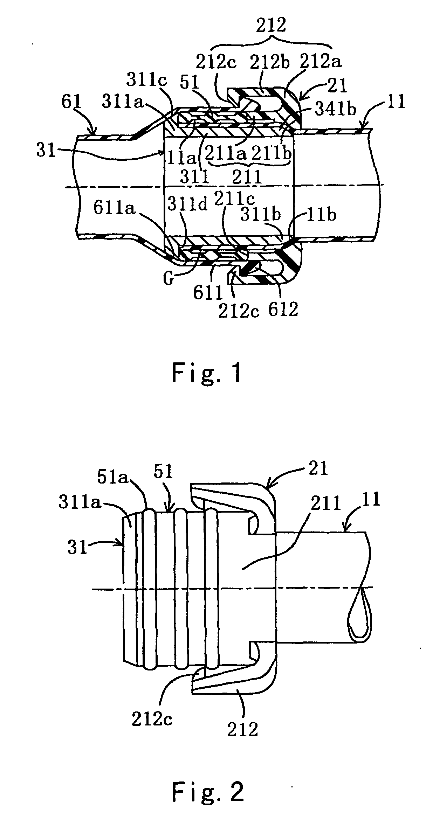

The connecting structure according to the present invention will now be specifically described with reference to the accompanying drawings. A preferred example of the connecting structure is shown in Fig.1 and Fig.2.

This connecting structure basically includes a resin tube 11 having a straight end portion, a tubular press-fitting bush (i.e. tubular press-fitting bush means) 31 which has a tubular bush body 311 press-fitted into an inner peripheral surface of at least one end of the resin tube 11, a resin connecting member 21 which includes a tubular base portion 211 inserted and mounted on the other end side of the outer peripheral surface of the diameter-enlarged end portion 11a formed by inserting the tubular bush body 311, and a first engaging element 212 which is integrally formed with the base portion 211, a tubular elastic sealing member 51 mounted to the outer peripheral surface of the diameter-enlarged end portion 11a of the resin tube 11, and a tubular mating member 61 including an annular second engaging projection 612 to be engaged with the first engaging element 212 of the connecting member 21 thereby being connected with the resin tube 11.

The diameter-enlarged end portion 11a of the resin tube 11 has an opening and a tapered shoulder wall 11b which is formed by the tubular press-fitting bush 31 press-fitted into the inner peripheral surface of the resin tube 11 and has a diameter decreasing toward the other end side.

The tubular base portion 211 of the connecting member 21 has a restraining inner peripheral surface at the other end side, and the restraining inner peripheral surface has a diameter decreasing toward the other side. By press-fitting the tubular press-fitting bush 31 into the inner peripheral surface of the resin tube 11, the diameter of this portion of the resin tube 11 is enlarged. The connecting member is inserted fit to the resin tube 11 in such a manner that the restraining inner peripheral surface of the connecting member 21 is engaged or firmly attached to the outer peripheral surface of the tapered shoulder wall 11b of the resin tube 11 to prevent the connecting member from removing outward in the axial direction.

The tubular press-fitting bush 31 includes an annular flange 311a projecting outward from the outer peripheral surface of the bush body 311 in a radial direction at one end side, and a tapered end portion 311b at the other end side.

More specifically, the connecting member 21 includes a tubular base portion 211 and a first engaging element 212 extending outward from the base portion 211. The base portion 211 and the first engaging element 212 are made of resin such as polyamide and are integrally formed into one-piece unit beforehand by injection molding.

The base portion 211 includes an opposing end portion 211a disposed at a position remote in an opposed relation from the flange 311a of the press-fitting bush 31 in the axial direction, and a resisting end portion 211b formed at the opposite side of the opposing end portion 211a. When the press-fitting bush 34 is inserted into the diameter-enlarged end portion 11a of the resin tube 11 , the resisting end portion 211b is in the resisting relation to the tapered end portion 311b of the bush body 311. In this manner, the connecting member 21 is firmly attached to the other side of the diameter-enlarged end portion 11a of the resin tube 11.

Specifically, the connecting member 21 has a resisting end portion 211b which has a tapered restraining inner surface with a diameter gradually decreasing toward the other end side and is positioned at the other end side of the base portion 211 as an inner peripheral surface corresponding to the tapered end portion 311b of the bush body 311. When the press-fitting bush 31 is press-fitted to the diameter-enlarged end portion 11a of the resin tube 11, the tapered restraining inner surface formed at the resisting end portion 211b via a tapered wall portion 11b of the resin tube 11 can be firmly attached to the diameter-enlarged end portion 11a,thereby essentially preventing the connecting member 21 from moving toward one end side from the tapered end portion 311b.

On the outer peripheral surface of the diameter-enlarged end portion 11a of the resin tube 11, an annular outer peripheral groove G is formed between the back surface (radially extending surface) 311d of the flange 311a of the press-fitting bush 31 and the terminal end surface 211c of the opposing end portion 211a of the base portion 211 of the connecting member 21. In the annular outer peripheral groove G, a tubular sealing member 51 is mounted in such a manner that the tubular sealing member 51 is in tightly contact with the outer peripheral surface of the diameter-enlarged end portion 11a. As a result, a tube assembly as shown in Fig. 2 is formed. The sealing member 51 has a sealing portion 51a slightly projecting from the flange 311a and the outer peripheral surface of the base portion 211.

In order that the tube assembly can be easily connected to the tubular mating member 61 in a fluid-tight condition, an inserting end portion 611 having an inner diameter slightly larger than the outer diameters of the flange 311a and the base portion 211 is formed at one end of the tubular mating member 61.

In this embodiment, the resin tubular mating member 61 has an inserting end portion 611 with an enlarged diameter at its one end via a tapered wall 611a. When the inserting end portion 611 is relatively inserted into the diameter-enlarged end portion 11a of the resin tube 11, the inner peripheral surface of the inserting end portion 611 is engaged with the outer peripheral surface of the tubular sealing member 51, and at the same time, the tapered outer peripheral surface 311c of the flange 311a of the press-fitting bush 31 is brought into contact with the tapered wall portion 611a of the tubular mating member 61. On the outer peripheral surface of the inserting end portion 611 of the tubular mating member 61, an annular second engaging projection 612 is formed. The second engaging projection 612 is snappedly engaged with the first engaging element 211 of the connecting member 21 when the outer peripheral surface 311c of the flange 311a is brought into contact with the tapered wall 611a.

Therefore, when the inserting end portion 611 of the tubular mating member is relatively inserted into the diameter-enlarged end portion 11a of the resin tube 11, the annular second engaging projection 612 is snappedly engaged with the first engaging element 212. As a result, the resin tube 11 is connected to the tubular mating member 61.

Specifically, the tubular base portion 211 of the connecting member 21 includes an opposing end portion 211a in an axial direction which is in the opposite relation with the flange 311a at one end side, and a resisting end portion 211b in a radial direction which is located at the other end side and has a tapered surface of which inner peripheral surface has a diameter decreasing toward the other end side. The engaging arm portion 212 (a first engaging element) includes a supporting member 212c extending outward from the opposing end portion 211b in a radial direction, an arm 212b extending toward one end side via the supporting portion 212c, and an engaging claw 212c formed on the tip end of the arm 212b. When the inserting end portion 611 is relatively inserted into the diameter-enlarged end portion 11a of the resin tube 11, the annular second engaging projection 612 is engaged with the engaging claw 212c by one-touch operation. In this manner, the resin tube 11 is easily connected to the tubular mating member 61 in a fluid-tight condition.

The connecting member 21 will be further described in detail. As illustrated in Fig. 1, the connecting member 21 is structured as follows: a plurality of supporting portions 212a extend outward from the outer peripheral surface of the tubular base portion 211 in a radial direction, and are at positions remote from each other in a peripheral direction; engaging arms 212, 212, integrally formed with the tubular base portion 21, extend from the respective supporting portions 212a toward one end in an axial direction with a slot formed at a distance from the respective outer peripheral surfaces of the tubular base portion 211 and the tubular bush 31 in a radial direction; and the plurality of arms 212 are respectively formed with an engaging claw 212c on their end portions at one end side, and the engaging claw 212c has a locking surface projecting inward in a radial direction and extending in a direction perpendicular to the axis. When the tubular mating member 61 is inserted into the slot formed at the inner side of the plurality of arms 212b in a radial direction, the engaging claws 212c are snappedly engaged with the second engaging projection 612 annularly projecting from the outer peripheral surface of the inserting end portion 611 of the tubular mating member 61.

Specifically, the engaging claw 212c has a large diameter at its one end from which the inserting end portion 611 of the tubular mating member 61 is inserted so that the inserting end portion 611 can be easily inserted. The inner peripheral surface of the engaging claw 212c is a tapered surface having a diameter decreasing toward the other end side. The surface opposite to the tapered surface of the engaging claw 212c is the locking surface perpendicular to the axis. When the inserting end portion 611 of the tubular mating member 61 is inserted into the slot formed at the inner side of the plurality of engaging arms 212 of the connecting member 21, the inserting end portion 611 travels while elastically deforming the arm 212 outward in a radial direction along the tapered surface of the engaging claw 212c. Then, the engaging arm 212 returns to its original position, and the second engaging projection 612 is snappedly engaged with the locking surface of the engaging claw 212c.

In this embodiment, the inserting end portion 611 of the tubular mating member 61 is inserted into the diameter-enlarged end portion 11a of the resin tube 11 of the tube connecting structure so as to snappedly engage the first engaging element 212 of the connecting member 21 with the second engaging projection 612 of the tubular mating member. The tapered surface 611a of the tubular mating member 61 is tightly brought into contact with the tapered surface 11b of the resin tube 11, thereby preventing the tubular mating member 61 and the resin tube 11 from moving inward in an axial direction. The connecting member 21 may be fixedly attached to the diameter-enlarged end portion 11a of the resin tube 11 before the press-fitting bush 31 is press-fitted into one end of the resin tube 11. However, it is sufficient that the connecting member 21 is inserted into the outer periphery of the resin tube 11 at the other end side so that the connecting member 21 does not move beyond the tapered portion 311b of the diameter-enlarged end portion 11a toward one end of the resin tube 11.

In order to position the press-fitting bush 31, the back surface 311d of the flange 311a of the press-fitting bush 31 is brought into contact with the terminal end surface of the diameter-enlarged end portion 11a of the resin tube 11.

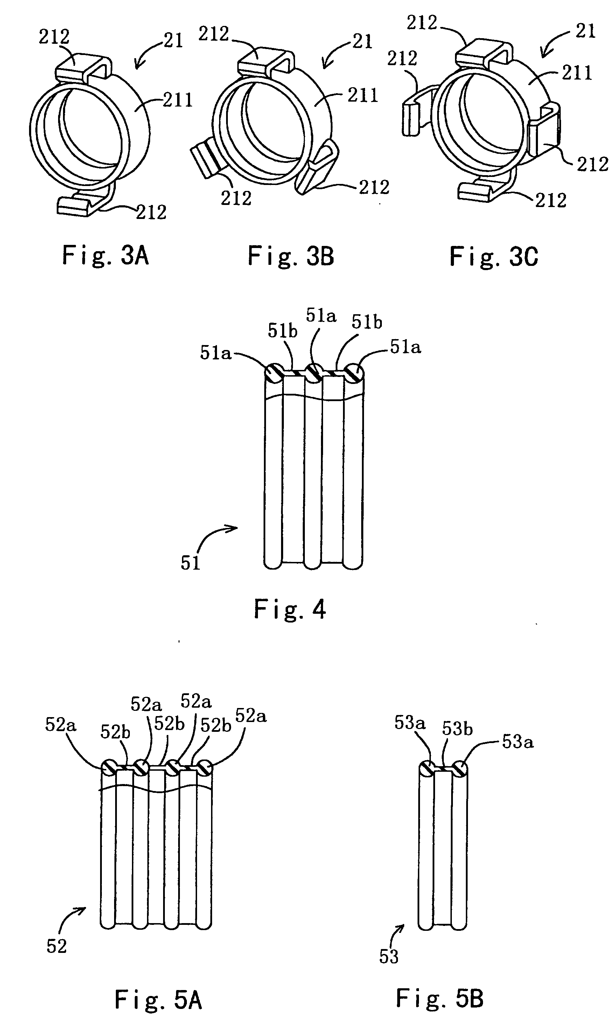

A plurality of engaging arms 212 may be formed in a peripheral direction at positions remote from each other at regular intervals, and the number thereof may be two as illustrated in Fig. 3A, three as illustrated in Fig. 3B, or four as illustrated in Fig. 3C. The plurality of engaging arms 212 are shown as the typical example of "the first engaging element" according to an embodiment of the present invention.

As illustrated in Fig. 4, the annular sealing member 51 includes a plurality of annular sealing portions 51a, 51a, and 51a with a circular cross-section which extend in a peripheral direction and are arranged on both ends and intermediate position thereof in the axial direction at regular pitch. The plurality of sealing portions 51a,51a,and 51a are connected to each other by a straight tubular connecting portions 51b, 51b. The inner peripheral surfaces of the sealing portions 51a, 51a, 51a are engaged with the outer peripheral surface of the diameter-enlarged end portion 11a of the resin tube 11 in a fluid-tight condition. The outer diameter of the sealing portion 51a is set to slightly larger than the flange 311a of the press-fitting bush 31. The flange 311a works as a holder to prevent the sealing member 51 from slipping off outward in an axial direction

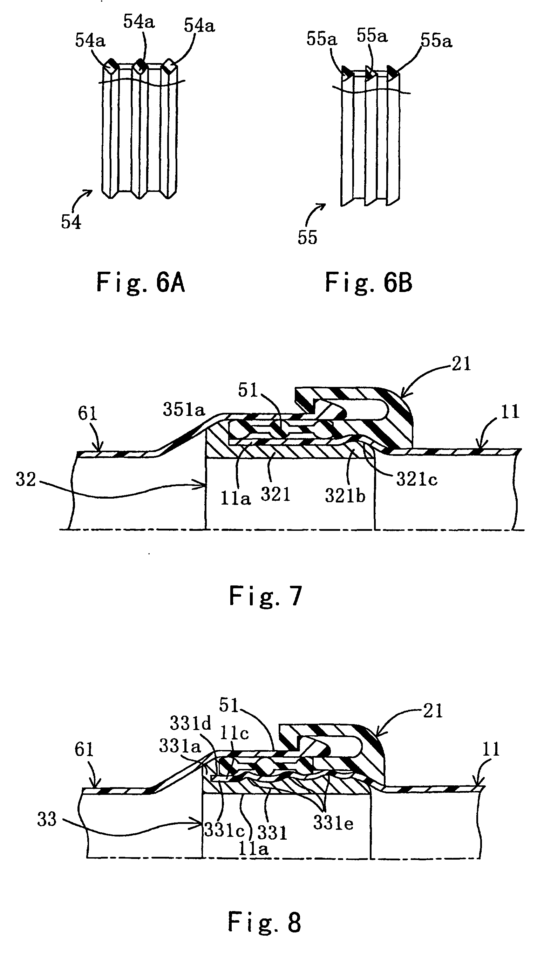

In another embodiment of the tubular sealing member, the sealing member may have various designs. For example, as illustrated in Fig. 5A, the sealing member 52 may be provided with four annular sealing portions 52a with a circular cross-section, and the four annular sealing portions 52a are connected to each other by the connecting portion 52b. Alternatively, as illustrated in Fig. 5B, the sealing member 53 may be provided two annular sealing portions 53a with a circular cross-section which are connected to each other by connecting portion 53b. It is also possible to make modifications on the annular sealing portions with a circular cross-section. For example, as illustrated in Fig. 6A, the circular sealing member 54 may be provided with annular sealing portions54a, 54a with a rhomboid cross-section. Alternatively, as illustrated in Fig. 6B, the annular sealing member 55 may be provided with annular sealing portions 55a with a triangular cross-section.

As illustrated in Fig. 7, the press-fitting bush 32 may be formed with an annular bulge 321b with a tapered portion 321c at the end portion of its bush body 321 at the other end side.

As illustrated in Fig. 8, the press-fitting bush 33 may be provided with a cap-shaped holding portion 331a at one end side thereof which prevents the tubular sealing member 51 from slipping off outward in the axial direction. The cap-shaped holding portion 331a is formed with a groove 331d having an annular bottom surface 331c, and the inlet 11c of the resin tube 11 is fitted to the groove 331d to firmly fix the resin tube 11. Alternatively, the press-fitting bush 33 may have annular projections 331e, 331e on the outer peripheral surface of its bush body 331 to firmly fix the resin tube 11. The bottom surface 331c formed in the holding portion 331a of the press-fitting bush 33 is brought into contact with the end surface of the diameter-enlarged end portion 11a of the resin tube 11.

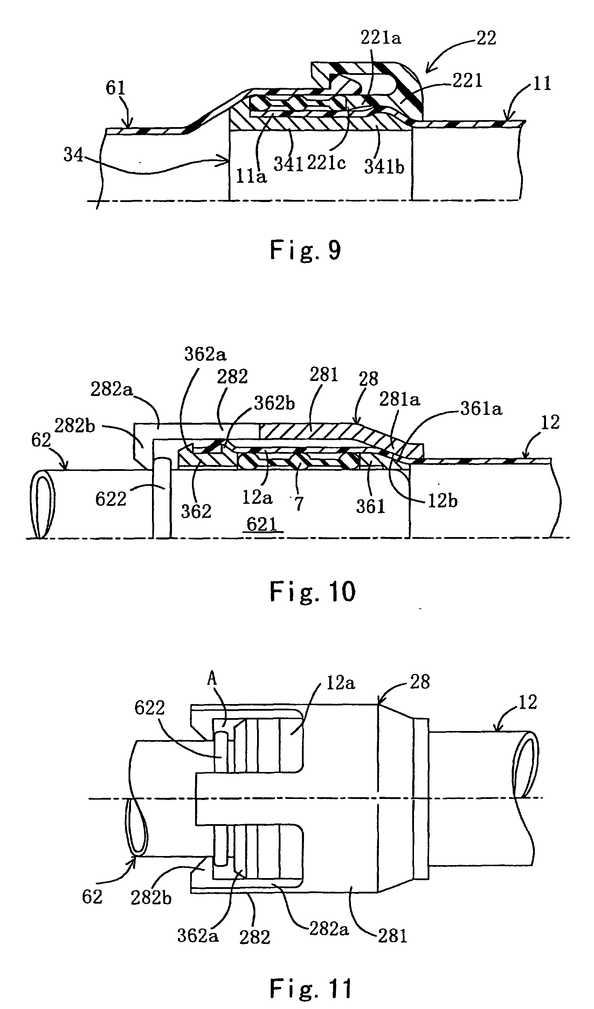

In an embodiment illustrated in Fig. 9, the tubular base portion 221 of the connecting member 22 is formed with an annular edged projection 221c with a substantially triangular cross-section which projects inward from the inner peripheral surface of the opposing end portion 221a of the base portion 221 in a radial direction. The annular edged projection 221c is formed to prevent the press-fitting bush 34 inserted into the inner peripheral surface of the diameter-enlarged end portion 11a of the resin tube 11 and the connecting member 22 fixed to the outer peripheral surface of the diameter-enlarged end portion 11a from easily moving and slipping off the resin tube 11.

Next, another embodiment will be described based on Figs. 10 to 11 where the outer peripheral surface of the tubular mating member is engaged with the inner peripheral surface of the sealing member, whereas in the above-described embodiments, the inner peripheral surface of the tubular mating member is engaged with the outer peripheral surface of the sealing member.

In Figs. 10 and 11, the reference numeral 12 denotes a resin tube. From one end of the resin tube 12, a first press-fitting bush 361 and a second press-fitting bush 362 are press-fitted to form a diameter-enlarged end portion 12a at one end of the resin tube 12 which has a diameter larger than the other side portion adjacent to the diameter-enlarged portion 12a. The first bush 361 inserted into the resin tube 12 forms a tapered shoulder wall 12b with a diameter decreasing toward the other side in the diameter-enlarged end portion 12a. To the outer peripheral surface of the tapered shoulder wall 12b of the diameter-enlarged end portion 12a, the connecting member 28 is attached and fixed in the resisting relation with respect to the first press-fitting bush 361.

The first press-fitting bush 361 includes a tapered portion 361a having a tapered outer peripheral surface with a diameter gradually decreasing toward the other end. The second press-fitting bush 362 includes a flange 362a projecting from the outer peripheral surface of its tubular bush body on one end side. The second press-fitting bush 362 is coaxially disposed at a position remote from the first press-fitting bush 361 at one end side.

The connecting member 28 includes a tubular base portion 281 and a first engaging portion 282. The first engaging portion 282 has an arm 282a extending from one end of the tubular base portion 281 in the axial direction.

More specifically, the base portion 281 of the connecting member 28 is formed with a tapered tubular wall portion 281a at the other end side thereof, and the tapered tubular wall portion 281a has a diameter gradually decreasing toward the other end side. When the first press-fitting bush 361 is press-fitted into the diameter-enlarged end portion 12a of the resin tube 12, the tapered tubular wall portion 281a is in resisting relation to the tapered end portion 361a. As a result, the connecting member 28 is attached and fixed to the tapered shoulder wall 12b with a diameter decreasing toward the other side formed at the other side of the diameter-enlarged end portion 12a of the resin tube 12 together with the first press-fitting bush 361. The second press-fitting bush 362 is formed with a flange 362a and an annular detent 362b at its opposing ends. The annular detent 362b prevents the second press-fitting bush 362 from removing and slipping off the resin tube 12 after it is press-fitted and fixed to one end of the diameter-enlarged end portion 12a of the resin tube 12. Between the first press-fitting bush 361 and the second press-fitting bush 362, a space is created, and this space cooperates with the inner peripheral surface of the diameter-enlarged end portion 12a to form an annular inner peripheral groove in the inner periphery of the diameter-enlarged end portion 12a. In the annular inner groove, a sealing member 7 is mounted in such a manner that the sealing portion at the inner peripheral side of the sealing member 7 projects slightly inward from the inner peripheral surfaces of the first press-fitting bush 361 and the second press-fitting bush 362.

As described above the connecting member 28, attached and fixed to the resin tube 12, has a first engaging portion 282 including a plurality of arms 282a disposed at a position remote from each other in a peripheral direction and outwardly extending from the base portion 281a in parallel with the axis toward one end side, and engaging claws 282b respectively formed on the tip ends of these arms 282a and facing inward. When the inserting end portion 621 of the tubular mating member 62, which is designed to be insertable into the inner peripheral surfaces of the first press-fitting bush 361 and the second press-fitting bush 362, is relatively inserted into the diameter-enlarged end portion 12a of the resin tube 12 and is engaged with the inner peripheral surface of the tubular sealing member 7, a space A is created between the engaging claw 282b and the second press-fitting bush 362. The annular second engaging portion 622 projecting from the outer peripheral surface of the inserting end portion 561 can be snappedly inserted into the space A. In this manner, the engaging claw 282b of the first engaging element 282 is engaged with the second engaging element 622, thereby connecting the resin tube 12 to the tubular mating member 62 in a fluid-tight condition.

As described above, the first press-fitting bush 361 and the second press-fitting bush 362 have inner diameters slightly larger than the inner diameter of the tubular sealing member 7. With this arrangement, the inserting end portion 621 of the tubular mating member 62 is inserted and fixed to the first press-fitting bush 361 and the second press-fitting bush 362, thereby connecting the resin tube 12 to the tubular mating member 62 in a fluid-tight condition.

As a preferable embodiment of the connecting member illustrated in Figs. 10 and 11, a connecting member 29 may have the following structure, as illustrated in Fig. 12. A ring 292b may be integrally formed on the tip end of a pair of arms 292a, 292a which are opposed to each other in a radial direction and extend in parallel to each other from the tubular base portion 291. On the inner peripheral surface of the ring 292b, a pair of engaging projections 292c, 292c are formed as a first engaging element 292 together. Thus-formed engaging element 29 makes it possible to easily release the pair of engaging projections 292c, 292c from the second engaging portion of the tubular mating member so as to easily detach the resin tube from the tubular mating member with no need for a releasing tool by deforming the ring 292b.

It should be noted that, as a preferred embodiment described above based on Fig. 1, the connecting member may have the following structure, as is the case of the connecting member illustrated in Fig. 12. In the connecting member, a pair of arms, extending in parallel to each other from the tubular base portion in a axially direction, are connected to each other at their tip ends by a ring, and the ring and the arms are integrally combined into one-piece unit. At the inner peripheral surface of the ring, a pair of engaging projections are formed as first engaging element. When the connecting structure is detached from the tubular mating member, the ring is deformed to release the pair of engaging projections from the second engaging portion of the tubular mating member. By use of the connecting member, the resin tube can be easily detached from the tubular mating member with no need for a releasing tool.

## Claims

1. A connecting structure for connecting a resin tube (11) and a tubular mating member (61) in a fluid-tight condition, comprising:
the resin tube (11) formed with a cylindrical wall with substantially uniform thickness, and including a diameter-enlarged end portion (11a) at its one end with a diameter larger than the other side portion adjacent to the diameter-enlarged end portion (11a) having an opening and a tapered shoulder wall (11b);
a connecting member (21) including a tubular base portion (211) having a restraining inner peripheral surface with a diameter decreasing toward the other side which is inserted and fitted to an outer periphery of the tapered shoulder wall (11b) of the resin tube (11) and a first engaging element (212) extending from the base portion(211);
a tubular press-fitting means (31) for essentially preventing the connecting member (21) from removing toward one end of the resin tube (11) including at least one bush body (311) with outwardly protruding annular element (311a) in a radial direction beyond the outer peripheral surface of the diameter-enlarged end portion (11a) at one end side thereof, the outwardly protruding annular element (311a) having a radially extending surface, the press-fitting means (31) forming the enlarged end portion (11a) at one end of the resin tube (11) and being press-fit and fixed in the opening of the resin tube (11) from its one end to engage or firmly attach and fix the restraining inner peripheral surface (211b) of the connecting member (21) to the tapered shoulder wall (11b);
an annular sealing member (51) mounted in an annular outer peripheral groove formed at the outer periphery of the diameter-enlarged end portion (11a) in a space in an axial direction between the radially extending surface of the outwardly protruding annular element (311a) and the base portion (211) of the connecting member (21);
a tubular mating member (61) including an inserting end portion (611) capable of being relatively inserted into the outer peripheries of the annular surface of the outwardly protruding annular element (311a) and the base portion (211) of the connecting member (21) by being engaged with the outer periphery of the sealing member (51) in a fluid-tight condition; and
a second engaging element (612) projecting outward from the outer peripheral surface of the inserting end portion (611) of the tubular mating member (61) in a radial direction, the second engaging element (612) capable of being snappedly engaged with the first connecting member (21) when the inserting end portion (611) is relatively inserted into the diameter-enlarged end portion (11a)
**characterised in that**
the first engaging element (212) is extending radially outwardly from the base portion (211).

2. A connecting structure according to claim 1, wherein the first engaging element and the second engaging element are engaged with each other in radial direction and an outward position at an outer periphery of the seal member.

3. A connecting structure for connecting a resin tube (12) and a tubular mating member (62) in a fluid-tight condition, comprising:
the resin tube (12) formed with a cylindrical wall with substantially uniform thickness, and including a diameter-enlarged end portion (12a) at its one end with a diameter larger than the other side portion adjacent to the diameter-enlarged end portion (12a) having an opening and a tapered shoulder wall (12b);
a connecting member (28) including a tubular base portion (281) having a restraining inner peripheral surface with a diameter decreasing toward the other side which is inserted and fitted to an outer periphery of the tapered shoulder wall (12b) of the resin tube (12) and a first engaging element (282) extending axially outwardly from the base portion (281);
a tubular press-fitting means for essentially preventing the connecting member (28) from removing toward one end of the resin tube (12) including at least one bush body (362) with outwardly protruding annular element (362a) in a radial direction beyond the outer peripheral surface of the diameter-enlarged end portion (12a) at one end side thereof, the outwardly protruding annular element (362a) having a radially extending surface, the press-fitting means forming the enlarged end portion (12a) at one end of the resin tube (12) and being press-fit and fixed in the opening of the resin tube (12) from its one end to engage or firmly attach and fix the restraining inner peripheral surface of the connecting member (28) to the tapered shoulder wall (12b);
**characterised by**
an annular sealing member (7) mounted in an annular inner peripheral groove formed at the inner periphery of the diameter-enlarged end portion (12a) in a space in an axial direction between said one bush body (362) and another bush body (361) independent from the one bush body (362);
a tubular mating member (62) including an inserting end portion (621) capable of being relatively inserted into the inner surfaces of said one bush body (362) and another bush body (361) by being engaged with the inner periphery of the sealing member (7) in a fluid-tight condition; and
a second engaging element (622) projecting outward from the outer peripheral surface of the inserting end portion (621) of the tubular mating member (62) in a radial direction, the second engaging element (622) capable of being engaged snappedly with the first connecting member (28) when the inserting end portion (621) is relatively inserted into the diameter-enlarged end portion (12a).

4. A connecting structure according to claim 1 or claim 3, wherein the outwardly protruding annular member (311a,362a) is formed by a flange or a cap-shaped holder.

5. A connecting structure according to claim 1 or claim 3, wherein the sealing member (51,7) is engaged with the inner peripheral surface of the diameter-enlarged end portion (11a,12a) of the resin tube (11,12).

6. A connecting structure according to claim 1 or claim 3, wherein the tubular press-fitting means includes a first tubular bush (361) press-fitted into the inner peripheral surface at the other end side of the diameter-enlarged end portion (11a,12a) of the resin tube (11,12) to secure the connecting member (21,28), and a second bush (362) formed with the outwardly protruding annular element (362a) and press-fitted in the inner peripheral surface at one end side of the diameter-enlarged end portion (11a,12a) of the resin tube (11,12) at a position coaxially remote from the first bush (361) in an axial direction.

7. A connecting structure according to claim 6, wherein the first bush (361) and the second bush (362) are integrally formed into one-piece unit.

8. A connecting structure according to claim 6, wherein the first bush (361) and the second bush (362) are independent from each other, and are firmly attached to positions remote from each other in the axial direction.

9. A connecting structure according to claim 8, wherein the second bush (362) has a flange (362b,362a) at one end side thereof for preventing the sealing member (51,7) from slipping off outward from the outer peripheral surface of the diameter-enlarged end portion (11a,12a) of the resin tube (11,12).

10. A connecting structure according to claim 8, wherein the second bush (362) has a cap-shaped holder extending outward from the outer peripheral surface at one end side thereof for preventing the sealing member (51,7) from slipping off outward from the outer peripheral surface the diameter-enlarged end portion (11a,12a) of the resin tube (11,12).

11. A connecting structure according to claim 1 or claim 3, wherein the inserting end portion (621) of the tubular mating member (62) has a contact portion (622) at its one end for being into contact with the outwardly protruding annular of the press-fitting means.

12. A connecting structure according to claim 1 or claim 3, wherein the connecting member (29) includes a tubular base portion (291), a pair of parallel arms (292a) extending in parallel to each other from the base portion (291) toward one end and symmetrically disposed with respect to each other about the diameter, a ring (292b) for annularly connecting free ends of the pair of arms (292a), and an engaging claw (292c) projecting inward from the inner peripheral surface of the ring (292b) in a radial direction.

## Patentansprüche

1. Verbindungsstruktur zum Verbinden eines Harzrohres (11) und eines rohrförmigen Passteiles (61) in einer flüssigkeitsdichten Weise, welche Struktur Folgendes aufweist:
das Harzrohr (11) mit einer zylindrischen Wand mit einer im Wesentlichen gleichmäßigen Stärke, einschließlich eines im Durchmesser vergrößerten Endabschnittes (11a) an seinem einen Ende mit einem Durchmesser, welcher größer ist, als der andere Seitenabschnitt anschließend an den im Durchmesser vergrößerten Endabschnitt (11a), welcher eine Öffnung und eine konische Bundwand (11b) aufweist;
eine Verbindungskomponente (21), einschließlich eines rohrförmigen Grundabschnittes (211) mit einer festhaltenden inneren Umfangsfläche mit einem Durchmesser, welcher sich in Richtung der anderen Seite verringert, welcher eingeschoben und an einem Außenumfang der konischen Bundwand (11b) des Harzrohres (11) befestigt wird, sowie eines ersten eingreifenden Elementes (212), welche sich vom Grundabschnitt (211) aus erstreckt;
ein rohrförmiges Presspassmittel (31), welches im Wesentlichen verhindert, dass sich die Verbindungskomponente (21) in Richtung eines Endes des Harzrohres (11) entfernt, einschließlich mindestens eines Hülsenkörpers (311) mit einem nach außen abstehenden Ringelement (311a), das in einer radialen Richtung über die Außenumfangsfläche des im Durchmesser vergrößerten Endabschnittes (11a) an einer Endseite davon hinausgeht, wobei das nach außen abstehende Ringelement (311a) eine sich radial erstreckende Oberfläche aufweist, und wobei das Presspassmittel (31) den vergrößerten Endabschnitt (11a) an einem Ende des Harzrohres (11) bildet und mit seinem einen Ende eingepresst und in der Öffnung des Harzrohres (11) befestigt ist, um die festhaltende innere Umfangsfläche (211b) der Verbindungskomponente (21) in die konische Bundwand (11b) eingreifen zu lassen oder fest daran anzubringen und zu befestigen;
eine ringförmige Dichtungskomponente (51), die in einer ringförmigen Außenumfangskerbe angebracht ist, welche am Außenumfang des im Durchmesser vergrößerten Endabschnittes (11a) an einer Stelle in axialer Richtung zwischen der sich radial erstreckenden Oberfläche des nach außen abstehenden Ringelementes (311a) und dem Grundabschnitt (211) der Verbindungskomponente (21) ausgebildet ist;
ein rohrförmiges Passteil (61), einschließlich eines einzuschiebenden Endabschnittes (611), welcher relativ in den Außenumfang der Ringfläche des nach außen abstehenden Ringelementes (311a) und des Grundabschnittes (211) der Verbindungskomponente (21) einschiebbar ist, wobei er in flüssigkeitsdichter Weise in den Außenumfang der Dichtungskomponente (51) eingreift; und
ein zweites eingreifendes Element (612), welches in radialer Richtung von der Außenumfangsfläche des einzuschiebenden Endabschnittes (611) des rohrförmigen Passteiles (61) nach außen absteht, wobei das zweite eingreifende Element (612) einschnappend in die erste Verbindungskomponente (21) eingerastet werden kann, wenn der einzuschiebende Endabschnitt (611) relativ in den im Durchmesser vergrößerten Endabschnitt (11a) eingeschoben ist,
**dadurch gekennzeichnet, dass** sich das erste eingreifende Element (212) vom Grundabschnitt (211) aus radial nach außen erstreckt.

2. Verbindungsstruktur nach Anspruch 1, wobei das erste eingreifende Element und das zweite eingreifende Element in radialer Richtung und an einer nach außen zeigenden Position an einem Außenumfang der Dichtungskomponente ineinander greifen.

3. Verbindungsstruktur zum Verbinden eines Harzrohres (12) und eines rohrförmigen Passteiles (62) in einer flüssigkeitsdichten Weise, welche Folgendes aufweist:
das Harzrohr (12) mit einer zylindrischen Wand mit einer im Wesentlichen gleichmäßigen Stärke, und einschließlich eines im Durchmesser vergrößerten Endabschnittes (12a) an seinem einen Ende mit einem Durchmesser, welcher größer ist als der andere Seitenabschnitt anschließend an den im Durchmesser vergrößerten Endabschnitt (12a), welcher eine Öffnung und eine konische Bundwand (12b) aufweist;
eine Verbindungskomponente (28), einschließlich eines rohrförmigen Grundabschnittes (281) mit einer festhaltenden inneren Umfangsfläche mit einem Durchmesser, welcher sich in Richtung des anderen Endes verringert, welcher eingeschoben und an einem Außenumfang der konischen Bundwand (12b) des Harzrohres (12) befestigt wird, sowie eines ersten eingreifenden Elementes (282), welches vom Grundabschnitt (281) aus axial nach außen absteht;
ein rohrförmiges Presspassmittel, welches im Wesentlichen verhindert, dass sich die Verbindungskomponente (28) in Richtung eines Endes des Harzrohres (12) entfernt, einschließlich mindestens eines Hülsenkörpers (362) mit einem nach außen abstehenden Ringelement (362a), das in einer radialen Richtung über die Außenumfangsfläche des im Durchmesser vergrößerten Endabschnittes (12a) an einer Endseite davon hinausgeht, wobei das nach außen abstehende Ringelement (362a) eine sich radial erstreckende Oberfläche aufweist, und wobei das Presspassmittel den vergrößerten Endabschnitt (12a) an einem Ende des Harzrohres (12) bildet und mit seinem einen Ende eingepresst und in der Öffnung des Harzrohres (12) befestigt ist, um die festhaltende innere Umfangsfläche der Verbindungskomponente (28) in die konische Bundwand (12b) eingreifen zu lassen oder fest dort anzubringen und zu befestigen;
**gekennzeichnet durch** eine ringförmige Dichtungskomponente (7) in einer ringförmigen Innenumfangskerbe angebracht ist, an der inneren Umfangsfläche des im Durchmesser vergrößerten Endabschnittes (12a) an einer Stelle in axialer Richtung zwischen dem einen Hülsenkörper (362) und einem weiteren Hülsenkörper (361) ausgebildet ist, welcher unabhängig von dem einen Hülsenkörper (362) ist;
ein rohrförmiges Passteil (62), einschließlich eines einzuschiebenden Endabschnittes (621), welcher relativ in die Innenflächen des einen Hülsenkörpers (362) und eines weiteren Hülsenkörpers (361) einschiebbar ist, wobei er in einer flüssigkeitsdichten Weise in die innere Umfangsfläche der Dichtungskomponente (7) eingreift; und
ein zweites eingreifendes Element (622), welches von der äußeren Umfangsfläche des einzuschiebenden Endabschnittes (621) des rohrförmigen Passteiles (62) in radialer Richtung nach außen absteht, wobei das zweite eingreifende Element (622) einschnappend in die erste Verbindungskomponente (28) eingerastet werden kann, wenn der einzuschiebende Endabschnitt (621) relativ in den im Durchmesser vergrößerten Endabschnitt (12a) eingeschoben ist.

4. Verbindungsstruktur nach Anspruch 1 oder Anspruch 3, wobei die nach außen abstehende Ringkomponente (311 a, 362a) durch einen Flansch oder einen kappenförmigen Halter gebildet wird.

5. Verbindungsstruktur nach Anspruch 1 oder Anspruch 3, wobei die Dichtungskomponente (51, 7) in die innere Umfangsfläche des im Durchmesser vergrößerten Endabschnittes (11a, 12a) des Harzrohres (11, 12) eingreift.

6. Verbindungsstruktur nach Anspruch 1 oder Anspruch 3, wobei das rohrförmige Presspassmittel eine erste rohrförmige Hülse (361) aufweist, welche in die innere Umfangsfläche an der anderen Endseite des im Durchmesser vergrößerten Endabschnittes (11a, 12a) des Harzrohres (11, 12) eingepresst ist, um die Verbindungskomponente (21, 28) zu sichern, sowie eine zweite Hülse (362) mit dem nach außen abstehenden Ringelement (362a) versehen und in die innere Umfangsfläche an einer Endseite des im Durchmesser vergrößerten Endabschnittes (11a, 12a) des Harzrohres (11, 12) eingepresst ist, und zwar an einer Stelle, welche in axialer Richtung koaxial von der ersten Hülse (361) entfernt ist.

7. Verbindungsstruktur nach Anspruch 6, wobei die erste Hülse (361) und die zweite Hülse (362) integriert in einer einteiligen Einheit ausgebildet sind.

8. Verbindungsstruktur nach Anspruch 6, wobei die erste Hülse (361) und die zweite Hülse (362) voneinander unabhängig und in axialer Richtung an voneinander entfernten Stellen fest angebracht sind.

9. Verbindungsstruktur nach Anspruch 8, wobei die zweite Hülse (362) einen Flansch (362b, 362a) an einer Endseite davon aufweist, um zu verhindern, dass die Dichtungskomponente (51, 7) von der Außenumfangsfläche des im Durchmesser vergrößerten Endabschnittes (11a, 12a) des Harzrohres (11, 12) nach außen abrutscht.

10. Verbindungsstruktur nach Anspruch 8, wobei die zweite Hülse (362) einen kappenförmigen Halter aufweist, welcher von der äußeren Umfangsfläche an einer Endseite davon aus nach außen absteht, um zu verhindern, dass die Dichtungskomponente (51, 7) von der Außenumfangsfläche des im Durchmesser vergrößerten Endabschnittes (11a, 12a) des Harzrohres (11, 12) nach außen abrutscht.

11. Verbindungsstruktur nach Anspruch 1 oder Anspruch 3, wobei der einzuschiebende Endabschnitt (621) des rohrförmigen Passteiles (62) einen Kontaktabschnitt (622) an seinem einen Ende aufweist, welcher in Kontakt mit dem nach außen abstehenden Ring des Presspassmittels steht.

12. Verbindungsstruktur nach Anspruch 1 oder Anspruch 3, wobei die Verbindungskomponente (29) einen rohrförmigen Grundabschnitt (291), ein Paar paralleler Arme (292a), welche parallel zueinander von dem Grundabschnitt (291) in Richtung eines Endes abstehen und welche um den Durchmesser symmetrisch zueinander angeordnet sind, einen Ring (292b) zum ringförmigen Verbinden der freien Enden des Armpaares (292a) sowie eine eingreifende Klaue (292c) umfasst, welche von der inneren Umfangsfläche des Ringes (292b) in radialer Richtung nach innen absteht.

## Revendications

1. Structure de raccordement pour raccorder un tube en résine (11) et un élément d'accouplement tubulaire (61) dans un état étanche aux fluides, comprenant :
le tube en résine (11) formé avec une paroi cylindrique d'une épaisseur sensiblement uniforme, et comprenant une partie d'extrémité de plus grand diamètre (11a) à sa première extrémité avec un diamètre supérieur à celui de l'autre partie latérale adjacente à la partie d'extrémité de plus grand diamètre (11a) ayant une ouverture et une paroi d'épaulement amincie (11b);
un élément de raccordement (21) comprenant une partie de base tubulaire (211) ayant une surface périphérique interne de retenue avec un diamètre qui diminue vers l'autre côté, qui est insérée et ajustée sur une périphérie externe de la paroi d'épaulement amincie (11b) du tube en résine (11) et sur un premier élément d'engagement (212) s'étendant de la partie de base (211);
un moyen d'ajustement serré tubulaire (31) pour empêcher essentiellement l'élément de raccordement (21) de se dégager vers une extrémité du tube en résine (11), comprenant au moins un corps de douille (311) avec un élément annulaire (311a) saillant vers l'extérieur dans une direction radiale au-delà de la surface périphérique externe de la partie d'extrémité de plus grand diamètre (11a) sur un de ses cotés d'extrémité, l'élément annulaire (311a) saillant vers l'extérieur ayant une surface s'étendant radialement, le moyen d'ajustement serré (31) formant la partie d'extrémité de plus grand diamètre (11a) à une extrémité du tube en résine (11) et étant ajusté serré et fixé dans l'ouverture du tube en résine (11) par sa première extrémité pour engager ou attacher solidement et fixer la surface périphérique interne de retenue (211b) de l'élément de raccordement (21) à la paroi d'épaulement amincie (11b);
un élément d'étanchéité annulaire (51) monté dans une rainure périphérique externe annulaire formée à la périphérie externe de la partie d'extrémité de plus grand diamètre (11a) dans un espace dans une direction axiale entre la surface s'étendant radialement de l'élément annulaire (311a) saillant vers l'extérieur et la partie de base (211) de l'élément de raccordement (21);
un élément d'accouplement tubulaire (61) comprenant une partie d'extrémité d'insertion (611) pouvant être insérée relativement dans les périphéries externes de la surface annulaire de l'élément annulaire (311a) saillant vers l'extérieur et de la partie de base (211) de l'élément de raccordement (21) par engagement sur la périphérie externe de l'élément d'étanchéité (51) dans un état étanche aux fluides; et
un second élément d'engagement (612) saillant vers l'extérieur de la surface périphérique externe de la partie d'extrémité d'insertion (611) de l'élément d'accouplement tubulaire (61) dans une direction radiale, le second élément d'engagement (612) pouvant être engagé par encliquetage sur le premier élément de raccordement (21) lorsque la partie d'extrémité d'insertion (611) est relativement insérée dans la partie d'extrémité de plus grand diamètre (11a),
**caractérisée en ce que**
le premier élément d'engagement (212) s'étend radialement vers l'extérieur de la partie de base (211).

2. Structure de raccordement selon la revendication 1, dans laquelle le premier élément d'engagement et le second élément d'engagement sont engagés l'un dans l'autre dans une direction radiale et dans une position externe sur une périphérie externe de l'élément d'étanchéité.

3. Structure de raccordement pour raccorder un tube en résine (12) et un élément d'accouplement tubulaire (62) dans un état étanche aux fluides, comprenant :
le tube en résine (12) formé avec une paroi cylindrique d'une épaisseur sensiblement uniforme, et comprenant une partie d'extrémité de plus grand diamètre (12a) à sa première extrémité avec un diamètre supérieur à celui de l'autre partie latérale adjacente à la partie d'extrémité de plus grand diamètre (12a) ayant une ouverture et une paroi d'épaulement amincie (12b);
un élément de raccordement (28) comprenant une partie de base tubulaire (281) ayant une surface périphérique interne de retenue avec un diamètre qui diminue vers l'autre côté, qui est insérée et ajustée sur une périphérie externe de la paroi d'épaulement amincie (12b) du tube en résine (12) et d'un premier élément d'engagement (282) s'étendant axialement hors de la partie de base (281);
un moyen d'ajustement serré tubulaire pour empêcher essentiellement l'élément de raccordement (28) de se dégager vers une extrémité du tube en résine (12), comprenant au moins un corps de douille (362) avec un élément annulaire (362a) saillant vers l'extérieur dans une direction radiale au-delà de la surface périphérique externe de la partie d'extrémité de plus grand diamètre (12a) sur l'un de ses cotés d'extrémité, l'élément annulaire (362a) saillant vers l'extérieur ayant une surface s'étendant radialement, le moyen d'ajustement serré formant la partie d'extrémité de plus grand diamètre (12a) à une extrémité du tube en résine (12) et étant ajusté serré et fixé dans l'ouverture du tube en résine (12) par sa première extrémité pour engager ou attacher et fixer solidement la surface périphérique interne de retenue de l'élément de raccordement (28) à la paroi d'épaulement amincie (12b);
**caractérisée par** un élément d'étanchéité annulaire (7) monté dans une rainure périphérique interne annulaire formé à la périphérie interne de la partie d'extrémité de plus grand diamètre (12a) dans un espace dans une direction axiale entre ledit un corps de douille (362) et un autre corps de douille (361) indépendant du premier corps de douille (362);
un élément d'accouplement tubulaire (62) comprenant une partie d'extrémité d'insertion (621) pouvant être insérée relativement dans les surfaces internes dudit un corps de douille (362) et d'un autre corps de douille (361) par engagement sur la périphérie interne de l'élément d'étanchéité (7) dans un état étanche aux fluides; et
un second élément d'engagement (622) saillant vers l'extérieur de la surface périphérique externe de la partie d'extrémité d'insertion (621) de l'élément d'accouplement tubulaire (62) dans une direction radiale, le second élément d'engagement (622) pouvant être engagé par encliquetage sur le premier élément de raccordement (28) lorsque la partie d'extrémité d'insertion (621) est relativement insérée dans la partie d'extrémité de plus grand diamètre (12a).

4. Structure de raccordement selon la revendication 1 ou la revendication 3, dans laquelle l'élément annulaire (311a, 362a) saillant vers l'extérieur est formé par une bride ou un support en forme de coiffe.

5. Structure de raccordement selon la revendication 1 ou la revendication 3, dans laquelle l'élément d'étanchéité (51, 7) est engagé sur la surface périphérique interne de la partie d'extrémité de plus grand diamètre (11a, 12a) du tube en résine (11,12).

6. Structure de raccordement selon la revendication 1 ou la revendication 3, dans laquelle le moyen d'ajustement serré tubulaire comprend une première douille tubulaire (361) ajustée serrée sur la surface périphérique sur l'autre côté d'extrémité de la partie d'extrémité de plus grand diamètre (11a, 12a) du tube en résine (11,12) pour fixer l'élément de raccordement (21,28), et une seconde douille (362) formée avec l'élément annulaire (362a) saillant vers l'extérieur et ajustée serrée sur la surface périphérique interne sur un côté d'extrémité de la partie d'extrémité de plus grand diamètre (11a, 12a) du tube en résine (11,12) dans une position coaxialement éloignée de la première douille (361) dans une direction axiale.

7. Structure de raccordement selon la revendication 6, dans laquelle la première douille (361) et la seconde douille (362) sont formées d'une seule pièce.

8. Structure de raccordement selon la revendication 6, dans laquelle la première douille (361) et la seconde douille (362) sont indépendantes l'une de l'autre et sont solidement fixées dans des positions éloignées l'une de l'autre dans la direction axiale.

9. Structure de raccordement selon la revendication 8, dans laquelle la seconde douille (362) a une bride (362b, 362a) sur un de ses côtés d'extrémité pour empêcher l'élément d'étanchéité (51, 7) de glisser hors de la surface périphérique externe de la partie d'extrémité de plus grand diamètre (11a, 12a) du tube en résine (11, 12).

10. Structure de raccordement selon la revendication 8, dans laquelle la seconde douille (362) a un support en forme de coiffe s'étendant vers l'extérieur de la surface périphérique externe sur un de ses côtés d'extrémité pour empêcher l'élément d'étanchéité (51, 7) de glisser hors de la surface périphérique externe de la partie d'extrémité de plus grand diamètre (11a, 12a) du tube en résine (11, 12).

11. Structure de raccordement selon la revendication 1 ou la revendication 3, dans laquelle la partie d'extrémité d'insertion (621) de l'élément d'accouplement tubulaire (62) a une partie de contact (622) à une de ses extrémités pour être en contact avec la partie annulaire saillant vers l'extérieur du moyen d'ajustement serré.

12. Structure de raccordement selon la revendication 1 ou la revendication 3, dans laquelle l'élément de raccordement (29) comprend une partie de base tubulaire (291), une paire de bras parallèles (292a) s'étendant parallèlement l'un à l'autre de la partie de base (291) vers une extrémité et disposés symétriquement l'un par rapport à l'autre autour du diamètre, une bague (292b) pour raccorder de manière annulaire les extrémités libres de la paire de bras (292a), et une griffe d'engagement (292c) saillant vers l'intérieur de la surface périphérique interne de la bague (292b) dans une direction radiale.
